# EUROPEAN PATENT SPECIFICATION

(11) **EP 2 680 221 B1**
(45) Date of publication and mention of the grant of the patent: **11.05.2016**
(21) Application number: 12305768.9
(22) Date of filing: 28.06.2012
(51) Int. Cl.: G06T 3/40

(54) **Method and system for generating a high-resolution video stream**
Verfahren und System zur Erzeugung eines Video-Streams mit hoher Auflösung
Procédé et système de génération d'un flux vidéo haute résolution

(43) Date of publication of application: 01.01.2014
(73) Proprietor: ALCATEL LUCENT, 92100 Boulogne-Billancourt (FR)
(72) Inventor: Namboodiri, Vinay, 400062 Mumbai (IN); Macq, Jean-François, 1083 Ganshoren (BE); Rondao Alface, Patrice, 1400 Nivelles (BE); Verzijp, Nico, 2018 Antwerpen (BE); Six, Erwin, 9270 Kalken (BE)
(74) Representative: ALU Antw Patent Attorneys

(56) References cited:
- WO-A1-2011/092696
- WO-A2-02/093916
- US-A1- 2006 003 328
- BISHOP C M ET AL: "Super-resolution Enhancement of Video", INTERNATIONAL WORKSHOP ON ARTIFICIAL INTELLIGENCE AND STATISTICS.(AISTATS 2003), no. 9TH, 3 January 2003 (2003-01-03), pages 1-8, XP002631362,
- VINCENT CHEUNG ET AL: "Video Epitomes", INTERNATIONAL JOURNAL OF COMPUTER VISION, KLUWER ACADEMIC PUBLISHERS, BO, vol. 76, no. 2, 23 December 2006 (2006-12-23), pages 141-152, XP19581846,
- FREEMAN W.T. ET AL.: "Learning Low-Level Vision", INTERNATIONAL JOURNAL OF COMPUTER VISION, vol. 40, no. 1, 2000, - 2000, pages 25-47, XP002687991,
- STEPHANE PELLETIER ET AL: "High-Resolution Video Synthesis from Mixed-Resolution Video Based on the Estimate-and-Correct Method", 2005 SEVENTH IEEE WORKSHOPS ON APPLICATIONS OF COMPUTER VISION (WACV/MOTION'05) - 5-7 JAN. 2005 - BRECKENRIDGE, CO, USA, IEEE, LOS ALAMITOS, CALIF., USA, 1 January 2005 (2005-01-01), pages 172-177, XP031059086,

## Description

### Field of the Invention

The present invention relates to the field of video image processing, and in particular to the field of super-resolution techniques, i.e. the problem of generating a high-resolution image from one or more low-resolution images.

### Background

The problem of generating a high-resolution panorama from several images has been approached in various ways.

A first option for improved high quality panoramas is to use higher quality panoramic cameras. Usually based on (almost) zero-parallax arrangements of multiple video sensors, these can capture panoramas that cover 360 degree views. However, there are limitations to the sensors currently and there is a limit to their abilities to sense the scene due to limited resolution of the camera device sensors. Also, including more sensors increases the cost of the device and in particular the cost of the real-time stitching.

Another option is to improve the image quality of broadcast using registration of an image from one camera onto other. These images can be stitched together to provide panoramic views. However, this approach suffers from parallax issues (different perspective deformations due to the difference in point of view and direction of view) and color differences. Moreover the dynamic registration of moving cameras is difficult. Another problem is that while some part of the image may be available in other cameras, there will always exist some regions of the scene that is not covered by any camera. In this case, the user will have a very uneven experience while watching an event.

US 2006/0003328 A1 discloses a method and system for enhancing data quality, wherein a low-quality data representation of a scene or signal sub-portion is enhanced by a quality enhancement function trained on a high-quality data representation of another scene or signal sub-portion as well as a low-quality data representation of the other scene or signal sub-portion.

### Summary

It is therefore an object of embodiments of the present invention to overcome, at least partially, one or more of the above stated problems.

According to an aspect of the invention, there is provided a process for generating a high-resolution video stream, the process comprising: receiving a low-resolution video stream; receiving at least one high-resolution video stream; selecting first image patches from the at least one high-resolution video stream; generating respective first low-resolution counterparts of the first high-resolution image patches; storing the first high-resolution image patches indexed by the first low-resolution counterparts in a first data storage; and improving the low-resolution video stream by substituting portions of frames of the low-resolution video stream that are similar to one or more of the first low-resolution counterparts with first high-resolution patches obtained from the first data storage in accordance with the indexing; wherein the low-resolution video stream and the at least one high-resolution video stream are substantially synchronized video streams representing a same general scenery; and wherein the low-resolution video stream and the at least one high-resolution video stream originate from different cameras.
The process according to the present invention is applied in conjunction with a second data storage comprising pre-stored second high-resolution image patches indexed by second low-resolution counterparts, and the process further comprises substituting portions of frames of the low-resolution video stream that are similar to one or more of the second low-resolution counterparts with second high-resolution patches obtained from the second data storage in accordance with its indexing.

The term "low-resolution video" is used herein to denote an overview image, preferably a panoramic image, which provides relatively little detail. The term "high-resolution video" is used herein to denote a video stream that provides more detail for a smaller portion of the scenery covered by the "low-resolution video". It is not necessary that the high-resolution video covers an area of the scenery that is wholly comprised within the scope of the low-resolution video. As will be explained below, a full overlap is preferred, but a partial overlap is also effective. Even a complete lack of overlap will not render the invention ineffective, provided that it is not permanent; i.e. there should be some link between the content of the low-resolution image and the high-resolution image.

A "patch" will be understood to be a small region of the video image. The patch is preferably rectangular, in a particular preference it is a square. It may have dimensions in the order of several pixels; preferably from 3x3 pixels up to 16x16 pixels.

It is an advantage of the present invention that parallax and perspective mismatch problems are avoided, because the process according to the invention does not attempt to paste entire morphologically recognizable features into the low-resolution image; on the contrary, very small patterns, which appear abstract to the human eye but which are nevertheless characteristic of the type of scenery that is being visualized, are substituted.

Thanks to the live nature of the process according to the invention, i.e. the use of high-resolution streams that are substantially synchronous to the low-resolution stream and that cover the same general scenery, the process according to the invention will outperform systems that are purely based on a static dictionary.

The process according to the invention combines the effectiveness of the dynamic creation of a patch dictionary with the efficiency of the use of a proven static dictionary.

In an embodiment of the process according to the present invention, the storing of the first high-resolution image patches comprises according an expiration time to the high-resolution image patches, the process further comprising deactivating the first high-resolution image patches in accordance with the expiration time.

In this embodiment, the dynamic dictionary is permanently updated, while avoiding an infinite increase in size of the stored data.

In an embodiment of the process according to the present invention, the improving of the low-resolution video stream comprises determining a similarity with the one or more of the first low-resolution counterparts by applying a "nearest neighbor" criterion, and wherein the substituting with first high-resolution patches comprises substituting with a weighted sum of the respective first high-resolution patches corresponding to the low-resolution counterparts that meet the "nearest neighbor" criterion.

It is an advantage of this embodiment that resolution can be improved for certain patches of imagery despite the absence of an exact match in the dynamic dictionary.

In an embodiment of the process according to the present invention, the similarity is determined on the basis of intensity gradients.

This simplification has proven to be computationally efficient, while leading to excellent results.

According to an aspect of the present invention, there is provided a computer program comprising software means configured to perform, when executed, the method as described above.

According to an aspect of the present invention, there is provided a system for generating a high-resolution video stream, the system comprising: a first video interface for receiving a low-resolution video stream; a second video interface for receiving at least one high-resolution video stream; a registration processor, operatively connected to the second video interface and to a first data storage, the registration processor being configured to select first high-resolution image patches from the at least one high-resolution video stream, to generate respective first low-resolution counterparts of the first high-resolution image patches, and to store the first high-resolution image patches indexed by the first low-resolution counterparts in the data storage); and an image improvement processor, operatively connected to the first video interface and to the first data storage, the image improvement processor being configured to substitute portions of frames of the low-resolution video stream that are similar to one or more of the first low-resolution counterparts with first high-resolution patches obtained from the first data storage in accordance with the indexing; wherein the low-resolution video stream and the at least one high-resolution video stream are substantially synchronized and represent a same general scenery; and wherein the low-resolution video stream and the at least one high-resolution video stream originate from different cameras.
The system according to the present invention further comprises a second data storage, the second data storage comprising pre-stored second high-resolution image patches indexed by second low-resolution counterparts, and the image improvement processor is further configured to substitute portions of frames of the low-resolution video stream that are similar to one or more of the second low-resolution counterparts with second high-resolution patches obtained from the second data storage in accordance with its indexing.

In an embodiment, the system according to the present invention further comprises a timer, operatively connected to the registration processor, and the registration processor is further configured to accord an expiration time to the first high-resolution image patches, and to deactivate the first high-resolution image patches in accordance with the expiration time in conjunction with the timer.

In an embodiment of the system according to the present invention, the image improvement processor is further configured to determine a similarity with the one or more of the first low-resolution counterparts by applying a "nearest neighbor" criterion, and to substitute the portions with a weighted sum of the respective first high-resolution patches corresponding to the low-resolution counterparts that meet the "nearest neighbor" criterion.

In an embodiment of the system according to the present invention, the image improvement processor is further configured to determine the similarity on the basis of intensity gradients.

The technical effects and advantages of the program and system according to embodiments of the present invention correspond, *mutatis mutandis,* to those mentioned above for the corresponding embodiments of the process according to the present invention.

### Brief Description of the Figures

Some embodiments of apparatus and/or methods in accordance with embodiments of the present invention are now described, by way of example only, and with reference to the accompanying drawings, in which:
Figure 1 provides an overview of a system and method according to an embodiment of the present invention;
Figure 2 provides an overview of a system and method according to another embodiment of the present invention;
Figure 3 provides a flow chart of a method according to an embodiment of the present invention; and
Figure 4 provides a block diagram of a system according to an embodiment of the present invention.

### Description of Embodiments

The focus of the present invention is on generating a high-resolution image from a single low-resolution image, with the help of a set of training images. The low-resolution image is typically a panoramic or wide-angle view of a scene, while the various training images provide high-resolution scenery. According to the invention, detailed (zoomed-in) images of the same general scenery are used as training images. These training images are processed in real time, to form a permanently updated dictionary of high-resolution image patches that can be blended into the panoramic video feed at locations where a low-resolution counterpart of such a patch is identified.

Embodiments of the present invention may advantageously be used in situations where multiple cameras, possibly including high definition (HD) cameras, are available to broadcast an event, but not everything is captured in one camera. When there is also an overview camera (omnicam or panoramic camera) available that captures the whole scene, this invention allows output of the overview cameras to be improved using the data from HD cameras. This enables broadcast of wider views with higher quality. A typical application is a television broadcast of a sports event, where a single overview camera may be used to capture a (low-resolution) overview of the entire playing field, or even the entire stadium, while multiple other cameras follow the movements of the players and/or the reactions of the audience.

In the process according to the invention, "patches" of high-resolution imagery taken from the detail images are substituted into the low-resolution base image. The individual "patches" of high-resolution imagery to be substituted into the low-resolution base image are preferably identified on the basis of their pattern of intensity gradients, ignoring the hue information. This approach has proven to give excellent results, while being more computationally efficient than a full-color pattern selection.

In the present application, the term "dictionary" denotes a database that associates a high-resolution intensity pattern (target) with a given number of low-resolution intensity pattern (key).

The dictionary does not have to be complete. In fact, for practical reasons (in particular, the required amount of storage), it is recommended that the dictionary does not comprise entries for every single possible combination of pixel values that could make up a patch - except for tiny patches, such a dictionary would quickly become huge. One way of identifying the most appropriate high-resolution substitute for a low-resolution patch that does not appear in the dictionary as such, is based on locally linear embedding. That method comprises identifying the nearest neighbors of the low-resolution patch in the dictionary, calculating weights for those nearest neighbors that allow reconstruction of the low-resolution patch with minimal error, and applying the same weights to the high-resolution counterparts of the identified nearest neighbors. The reconstructed high-resolution patch is then used as a substitute for the original low-resolution patch.

The present invention is based *inter alia* on the insight of the inventors that the use of a static dictionary does not always provide acceptable high-resolution panoramas.

While static dictionaries are believed to work adequately for natural images, other types of imagery (notably sports programs) are more specific and dynamic in nature. Using a generic database does not serve well in super-resolving the images of specific people and specific sports. This is because, in sports it is necessary to ensure the specific player and scene characteristics. A generic solution does not take this into account. For instance, in football, it is necessary to ensure that a specific player on super-resolution does not resemble another one. Additionally, specific objects such as the ball and lines on the playing field are crucial and a generic super-resolution method could modify the details in an unacceptable way during the super-resolution procedure.

Hence, according to the invention, the dictionary is populated in real-time with key-target pairs that are registered from the actual image material to which the super-resolution technique is being applied.

The process of identifying image patches that can serve as dictionary entries is referred to as registration. It includes the selection of a patch from a high-resolution image, downsampling of that patch to obtain a low-resolution counterpart, and storing the original high-resolution patch along with its low-resolution counterpart as a key-target pair.

The present invention circumvents the above problems by adopting super-resolution by especially taking into account the specific scene-related information in the super-resolution procedure. The result is a system that may use live high definition (HD) cameras to improve a low resolution panorama by using super-resolution and coarse registration techniques.

Accordingly, a system is proposed which obtains online coarse scale related information from the HD cameras and the wide-angle panoramic view. A coupled high-resolution and low-resolution (HR-LR) dictionary is obtained by learning, and used for the super-resolution technique. No explicit overlap is needed. This is because a dictionary is populated with entries that piecewise maps the low-resolution panoramic view to the high-resolution view, without requiring that the individual pieces (patches) originate from the same field of view. This dictionary is based on statistics of the scene and is preferably operated in the gradient/edge domain (such that it is unaffected by color). The learning is done locally using patches. Note that it is not necessary for HD views to be present for all of the panoramic view.

The output of the overview panoramic camera is super-resolved using the learned dictionary through a projection step.

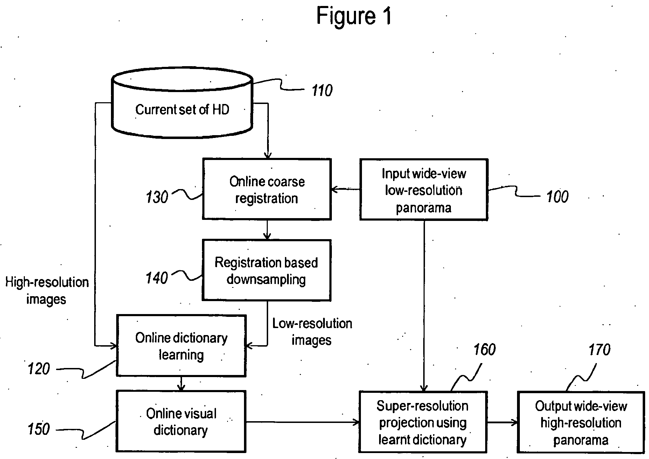

A first process will now be described in connection with Figure 1.

In the first process, the relevant scene related information is obtained from the set of HD cameras **110.** There are various ways of doing this. An example of obtaining the related scene information is to perform a rough registration and alignment procedure **130.** The outcome of the registration process is the scaling ratio between the HD view and the corresponding area in the (lower resolution) panorama. The HD view is then downscaled according to that scaling ratio. The resulting view and its original HD copy are used in an online dictionary learning step.

An online dictionary **150** is then derived from this scene-related information. This is done by first preprocessing the input frames by performing gradient operation in the high resolution (HR) domain and mid-band filters in the corresponding down-sampled low-resolution (LR) domain. From the image frames we extract local corresponding HR and LR patches **140.** These are then quantized with a clustering algorithm resulting in a coupled dictionary of HR and LR visual vocabulary **120.** Once the online dictionary is learnt, we then do a projection **160** of the low-resolution patches from the panorama **100** onto the dictionary. This allows us to obtain the corresponding high resolution gradient patch information that is used for reconstructing the scene. This high-resolution gradient information is coupled with the color information to result in a high resolution output panoramic image **170.**

Preferably, the patch substitution process is performed in a dense manner, *i.e*. by substituting overlapping portions of the original low-resolution image by high-resolution counterparts. Most preferably, the pixel values of the overlapping parts of the high-resolution portions are combined (for instance by means of averaging or weighted averaging), so as to avoid boundary artifacts. Preferably, the image portions to be substituted are spaced apart by 3 pixels (center-to-center), and the patches are slightly greater than 3x3 pixels, thus forming an overlapping grid.

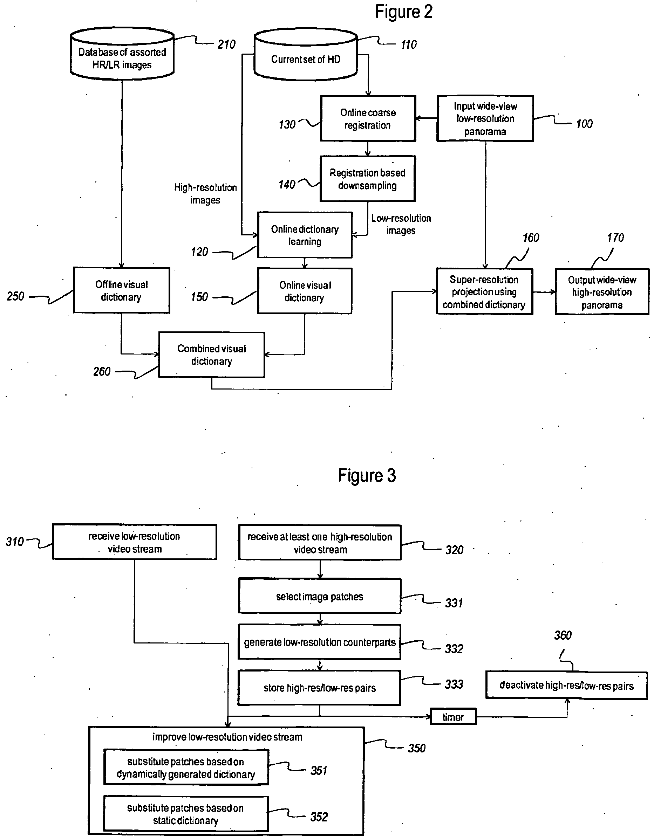

A second embodiment of the process according to the present invention will now be described in connection with Figure 2.

In the second embodiment, the online approach of the invention, as explained in connection with Figure 1, is combined with an offline approach. The same reference signs are used to denote the same features; these will not be explicitly repeated here. Thus, a previously populated (static) dictionary **210/250** is used in addition to the dynamic dictionary. The dynamic dictionary is adapted to the current scene by learning from the current HR frames. A simple example of an adaptation is by learning a more exhaustive dictionary of *K* features in the offline phase and a smaller dictionary of *M* features in the online learning phase. The combined dictionary **260** of *K+M* features can then be used in the super-resolution projection step **160.** This results also in a wide angle high resolution panorama **170** being generated and combines the strengths of the online and offline methods.

The video resulting from the process according to the invention will provide a much better user-experience, as having a high resolution panoramic view of the whole scene available would enable the user to choose and focus on what exactly he wants to see and at what level in much higher detail than was previously possible. It allows for better resolution in areas where no broadcast camera is available. In areas where broadcast cameras are available, the pure broadcast view will still offer higher resolution. However, solving parallax issues is complex and computationally expensive, so the invention offers an advantageous alternative for that case as well.

Figure 3 provides an exemplary flow chart of a method according to an embodiment of the present invention.

In a first step **310,** a low-resolution video stream is received. Preferably simultaneously, one or more high-resolution video streams are received **320.** The low-resolution video stream and the high-resolution video stream(s) are substantially synchronized video streams, representing the same general scenery.

Image patches are selected **331** from these high-resolution video streams, which may be scaled and/or transformed (as explained above, not shown in the Figure) to match the corresponding area in the low-resolution video. Low-resolution counterparts are generated **332** for the selected high-resolution image patches. Next, pairs of low-resolution counterparts and the high-resolution patches from which they are derived are stored **333** as an indexed dictionary in an appropriate data storage means.

The actual improving **350** of the low-resolution video stream is performed by substituting **351** portions of the low-resolution video stream that are sufficiently similar to one or more of the stored low-resolution patches with corresponding high-resolution patches obtained from the first data storage.

The process may further comprise substituting **352** portions of the low-resolution video stream with high-resolution patches obtained from a second, static data storage.

The storage of low-resolution/high-resolution pairs in the dynamic dictionary is preferably subjected to an expiration time, such that the process may comprise deactivating **360** patch pairs in accordance with said expiration time. This ensures that the size of the dynamic dictionary does not grow indefinitely, and that is contents represent the current (or at least most recent) statistics of the visualized scenery. The expiration time may be expressed as a number of frames (*i.e*., video frames), or as an absolute amount of time. Adequate results can be achieved with an expiration time of 3 video frames, or approximately 100-120 ms. Preferably, the expiration time is set between 3 and 1000 video frames.

The substitution of image portions by high-resolution patches is not necessarily one-to-one. The process may determine the similarity between an image portion and the patches in the dictionary by applying a "nearest neighbor" criterion. Accordingly, the substitution step would include synthesizing a high-resolution patch from the various high-resolution patches that correspond to the respective nearest neighbors in of the target portion in the low-resolution domain.

Hereinabove, the steps of the exemplary process have been describe in a particular order for clarity reasons only. In general, the steps of the methods according to the invention may performed in a different order, parallelized, or serialized, unless it is clear from the context that a particular step cannot occur unless preceded or followed by a particular other step.

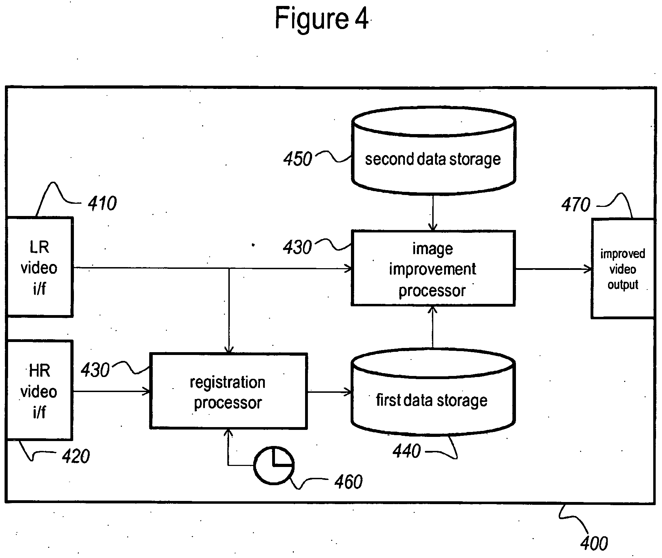

Figure 4 provides a block diagram of a system according to an embodiment of the present invention.

The illustrated system **400** includes a first video interface **410** for receiving a low-resolution video stream and a second video interface **420** for receiving at least one high-resolution video stream. The low-resolution video stream and the at least one high-resolution video stream are substantially synchronized.

The term "interface" designates the necessary hardware and software required to establish data communication connectivity across the various layers of the protocol stack, as is well known to a person skilled in the art. Preferably, standardized protocols are used. An access interface may for instance include an interface for an xDSL, xPON, WMAN, or 3G link. A LAN interface may for instance include an interface for one or more of an IEEE 802.3 "Ethernet" link, an IEEE 802.11 "Wireless LAN" link. A PAN interface may for instance include a USB interface or a Bluetooth interface.

The system further includes a registration processor **430,** operatively connected to the second video interface **420** and to a first data storage **440.** The registration processor **430** is configured to select first high-resolution image patches from the high-resolution video stream(s), to generate respective low-resolution counterparts of the high-resolution image patches, and to store the high-resolution image patches indexed by the first low-resolution counterparts in the data storage **440.** In order to properly scale and/or transform the high-resolution patches, the area to which they belong may be matched on a feature basis with the corresponding area of the low-resolution video stream. To this end, the registration processor **430** would be further operatively connected to the first video interface **410.**

The system further includes an image improvement processor **450,** operatively connected to the first video interface **410** and to the first data storage **440.** The image improvement processor **450** is configured to substitute portions of the low-resolution video stream that are similar to one or more stored low-resolution counterparts with high-resolution patches obtained from the first data storage **440** in accordance with the indexing.

A second data storage **450** is be present in the system **400.** This second data storage **450** comprises a static dictionary, consisting of pre-stored high-resolution image patches indexed by their low-resolution counterparts. The image improvement processor **450** is further configured to substitute portions of the low-resolution video stream that are similar to one or more of said second low-resolution counterparts with high-resolution patches obtained from the second data storage **440** in accordance with its indexing.

The system **400** may include a timer **460,** in order to impose an expiration policy upon the entries stored in the dynamic dictionary at the first data storage **440.** The timer **460** is operatively connected to the registration processor **430,** which is further configured to accord an expiration time to the high-resolution image patches, and to deactivate these high-resolution image patches (preferably by deleting them from the storage **440**) in accordance with the expiration time, using the timing input from the timer **460.**

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A process for generating a high-resolution video stream, the process comprising:
- receiving (310) a low-resolution video stream;
- receiving (320) at least one high-resolution video stream;
- selecting (331) first image patches from said at least one high-resolution video stream;
- generating (332) respective first low-resolution counterparts of said first high-resolution image patches;
- storing (333) said first high-resolution image patches indexed by said first low-resolution counterparts in a first data storage; and
- improving (350) said low-resolution video stream by substituting (351) portions of frames of said low-resolution video stream that are similar to one or more of said first low-resolution counterparts with first high-resolution patches obtained from said first data storage in accordance with said indexing;
wherein said low-resolution video stream and said at least one high-resolution video stream are substantially synchronized video streams representing a same general scenery,
wherein said low-resolution video stream and said at least one high-resolution video stream originate from different cameras; and
**characterized in that**, applied in conjunction with a second data storage comprising pre-stored second high-resolution image patches indexed by second low-resolution counterparts, the process further comprises substituting (352) portions of frames of said low-resolution video stream that are similar to one or more of said second low-resolution counterparts with second high-resolution patches obtained from said second data storage in accordance with its indexing.

2. The process according to any of the preceding claims, wherein said storing (333) of said first high-resolution image patches comprises according an expiration time to said high-resolution image patches, the process further comprising deactivating (360) said first high-resolution image patches in accordance with said expiration time.

3. The process according to any of the preceding claims, wherein said improving (350) of said low-resolution video stream comprises determining a similarity with said one or more of said first low-resolution counterparts by applying a "nearest neighbor" criterion, and wherein said substituting with first high-resolution patches comprises substituting with a weighted sum of the respective first high-resolution patches corresponding to the low-resolution counterparts that meet said "nearest neighbor" criterion.

4. The process according to any of the preceding claims, wherein said similarity is determined on the basis of intensity gradients.

5. A computer program comprising software means configured to perform, when executed the method of any of the preceding claims.

6. A system (400) for generating a high-resolution video stream, the system (400) comprising:
- a first video interface (410) for receiving a low-resolution video stream;
- a second video interface (420) for receiving at least one high-resolution video stream;
- a registration processor (430), operatively connected to said second video interface (420) and to a first data storage (440), said registration processor (430) being configured to select first high-resolution image patches from said at least one high-resolution video stream, to generate respective first low-resolution counterparts of said first high-resolution image patches, and to store said first high-resolution image patches indexed by said first low-resolution counterparts in said data storage (440); and
- an image improvement processor (450), operatively connected to said first video interface (410) and to said first data storage (440), said image improvement processor (450) being configured to substitute portions of frames said low-resolution video stream that are similar to one or more of said first low-resolution counterparts with first high-resolution patches obtained from said first data storage (440) in accordance with said indexing;
wherein said low-resolution video stream and said at least one high-resolution video stream are substantially synchronized and represent a same general scenery,
wherein said low-resolution video stream and said at least one high-resolution video stream originate from different cameras; and
**characterized by** further comprising a second data storage (450), said second data storage (450) comprising pre-stored second high-resolution image patches indexed by second low-resolution counterparts,
wherein said image improvement processor (450) is further configured to substitute portions of frames of said low-resolution video stream that are similar to one or more of said second low-resolution counterparts with second high-resolution patches obtained from said second data storage (440) in accordance with its indexing.

7. The system (400) according to claim 6, further comprising a timer (460), operatively connected to said registration processor (430), wherein said registration processor (430) is further configured to accord an expiration time to said first high-resolution image patches, and to deactivate said first high-resolution image patches in accordance with said expiration time in conjunction with said timer.

8. The system (400) according to any of claims 6-7, wherein said image improvement processor (450) is further configured to determine a similarity with said one or more of said first low-resolution counterparts by applying a "nearest neighbor" criterion, and to substitute said portions with a weighted sum of the respective first high-resolution patches corresponding to the low-resolution counterparts that meet said "nearest neighbor" criterion.

9. The system (400) according to any of claims 6-8, wherein said image improvement processor (450) is further configured to determine said similarity on the basis of intensity gradients.

## Patentansprüche

1. Verfahren zur Erzeugung eines hochauflösenden Videostreams, wobei das Verfahren Folgendes umfasst:
- Empfangen (310) eines niedrigauflösenden Videostreams;
- Empfangen (320) mindestens eines hochauflösenden Videostreams;
- Auswählen (331) erster Bildpatches von besagtem mindestens einem hochauflösendem Videostream;
- Generieren (332) entsprechender erster niedrigauflösender Gegenstücke zu besagten ersten hochauflösenden Bildpatches;
- Speichern (333) besagter erster hochauflösender Bildpatches, die indiziert sind von besagten ersten niedrigauflösenden Gegenstücken in einem ersten Datenspeicher; und
- Verbessern (350) besagter niedrigauflösender Videostreams durch das Ersetzen (351) solcher Teile der Bildrahmen besagten niedrigauflösenden Videostreams, welche einem oder mehreren besagter niedrigauflösender Gegenstücke ähnlich sind, durch erste hochauflösende Patches, die gemäß besagter Indizierung von besagtem erstem Datenspeicher bezogen werden,
wobei besagter niedrigauflösender Videostream und besagter mindestens eine hochauflösende Videostream im Wesentlichen synchronisierte Videostreams sind, welche dieselbe allgemeine Szenenfolge wiedergeben,
wobei besagter niedrigauflösender Videostream und der besagte mindestens eine hochauflösende Videostream von verschiedenen Kameras aufgenommen wurden; und **dadurch gekennzeichnet, dass** das Verfahren - wenn es in Verbindung mit einem zweiten Datenspeicher ausgeführt wird, welcher vorgespeicherte, zweite hochauflösende Bildpatches enthält, die durch zweite niedrigauflösende Gegenstücke indiziert sind - weiterhin das Ersetzen (352) von Rahmenteilen besagten niedrigauflösenden Videostreams, welche einem oder mehreren besagter zweiter niedrigauflösender Gegenstücke ähnlich sind, durch zweite hochauflösende Patches umfasst, die von besagtem zweitem Datenspeicher gemäß dessen Indexierung bezogen werden.

2. Verfahren nach einem beliebigen der vorstehenden Ansprüche, wobei besagtes Speichern (333) besagter erster hochauflösender Bildpatches das Zuteilen einer Ablauffrist zu besagten hochauflösenden Bildpatches umfasst, wobei das Verfahren weiterhin das Deaktivieren (360) besagter erster hochauflösender Bildpatches gemäß besagter Ablauffrist umfasst.

3. Verfahren nach einem beliebigen der vorstehenden Ansprüche, wobei besagtes Verbessern (350) besagter niedrigauflösender Videostreams das Bestimmen einer Ähnlichkeit mit besagtem einem oder besagten mehreren, ersten niedrigauflösenden Gegenstücken durch die Anwendung eines Nächster-Nachbar-Kriteriums umfasst und wobei besagtes Ersetzen durch erste hochauflösende Patches das Ersetzen durch eine gewichtete Summe der entsprechenden ersten hochauflösenden Patches umfasst, welche den niedrigauflösenden Gegenstücken entsprechen, die das Nächster-Nachbar-Kriterium erfüllen.

4. Verfahren nach einem beliebigen der vorstehenden Ansprüche, wobei besagte Ähnlichkeit auf der Grundlage von Intensitätsgradienten bestimmt wird.

5. Computerprogramm, Softwaremittel umfassend, welche konfiguriert sind für die Durchführung eines jeden der vorangehenden Ansprüche, wenn es ausgeführt wird.

6. System (400) zur Erzeugung eines hochauflösenden Videostreams, wobei das System (400) Folgendes umfasst:
- eine erste Videoschnittstelle (410) für den Empfang eines niedrigauflösenden Videostreams;
- eine zweite Videoschnittstelle (420) für den Empfang mindestens eines hochauflösenden Videostreams;
- einen Registrierungsprozessor (430), betriebsbereit angeschlossen an besagte zweite Videoschnittstelle (420) und an einen ersten Datenspeicher (440), wobei besagter Registrierungsprozessor (430) konfiguriert ist für das Auswählen erster hochauflösender Bildpatches aus besagtem mindestens einen hochauflösenden Videostream zwecks Generierens jeweiliger erster niedrigauflösender Gegenstücke besagter erster hochauflösender Bildpatches und zwecks Speicherung besagter erster hochauflösender Bildpatches, die von besagten niedrigauflösenden Gegenstücken in besagtem Datenspeicher (440) indiziert sind; und
- einen Bildverbesserungsprozessor (450), betriebsbereit angeschlossen an besagte erste Videoschnittstelle (410) und besagten ersten Datenspeicher (440), wobei besagter Bildverbesserungsprozessor (450) konfiguriert ist für das Ersetzen solcher Rahmenabschnitte von Rahmen niedrigauflösender Videostreams, die einem oder mehreren von besagten niedrigauflösenden Gegenstücken ähneln, durch erste hochauflösende Patches, die gemäß besagter Indizierung von besagtem ersten Datenspeicher (440) abgerufen wurden;
wobei besagter niedrigauflösender Videostream und besagter mindestens eine hochauflösende Videostream im Wesentlichen synchronisiert sind und dieselbe allgemeine Szenenfolge wiedergeben,
wobei besagter niedrigauflösender Videostream und der besagte mindestens eine hochauflösende Videostream von verschiedenen Kameras aufgenommen wurden; und **dadurch gekennzeichnet ist, dass** es weiterhin einen zweiten Datenspeicher (450) umfasst, wobei besagter zweiter Datenspeicher (450) vorgespeicherte zweite hochauflösende Bildpatches umfasst, die durch zweite niedrigauflösende Gegenstücke indiziert sind,
Wobei besagter Bildverbesserungsprozessor (450) weiterhin konfiguriert ist für das Ersetzen von Teilen der Bildrahmen besagten niedrigauflösenden Videostreams, welche einem oder mehreren besagter zweiter niedrigauflösender Gegenstücke der ähnlich sind, durch zweite hochauflösende Patches, die gemäß besagter Indizierung von besagtem zweitem Datenspeicher (440) bezogen werden,

7. System (400) nach Anspruch 6, weiterhin einen Zeitgeber (460) umfassend, der betriebsbereit verbunden ist mit besagtem Registrierungsprozessor (430), wobei besagter Registrierungsprozessor (430) weiterhin dafür konfiguriert ist, besagten ersten hochauflösenden Bildpatches eine Ablaufzeit zuzuweisen und besagte erste hochauflösende Bildpatches gemäß besagter Ablaufzeit in Verbindung mit besagtem Zeitgeber zu deaktivieren.

8. System (400) nach einem beliebigen der Ansprüche 6 bis 7, wobei besagter Bildverbesserungsprozessor (450) weiterhin konfiguriert ist für das Bestimmen einer Ähnlichkeit mit besagtem einem oder besagten mehreren, ersten niedrigauflösenden Gegenstücken durch die Anwendung eines Nächster-Nachbar-Kriteriums und für das Ersetzen besagter Anteile durch eine gewichtete Summe der entsprechenden, ersten hochauflösenden Patches, welche den niedrigauflösenden Gegenstücken entsprechen, die das Nächster-Nachbar-Kriterium erfüllen.

9. System (400) nach einem beliebigen der Ansprüche 6 bis 8, wobei besagter Bildverbesserungsprozessor (450) weiterhin für das Bestimmen besagter Ähnlichkeit auf der Grundlage von Intensitätsgradienten zu bestimmen.

## Revendications

1. Processus pour générer un flux vidéo haute résolution, le processus comprenant les étapes suivantes :
- recevoir (310) un flux vidéo basse résolution ;
- recevoir (320) au moins un flux vidéo haute résolution ;
- sélectionner (331) des premières zones d'image à partir dudit au moins un flux vidéo haute résolution ;
- générer (332) des premiers équivalents basse résolution respectifs desdites premières zones d'image haute résolution ;
- stocker (333) lesdites premières zones d'image haute résolution indexées par lesdits premiers équivalents basse résolution dans un premier stockage de données ; et
- améliorer (350) ledit flux vidéo basse résolution en remplaçant (351) des parties de trames dudit flux vidéo basse résolution qui sont identiques à un ou plusieurs desdits premiers équivalents basse résolution par des premières zones haute résolution obtenues à partir dudit premier stockage de données conformément à ladite indexation ;
dans lequel ledit flux vidéo basse résolution et ledit au moins un flux vidéo haute résolution sont des flux vidéo sensiblement synchronisés représentant un même décor général,
dans lequel ledit flux vidéo basse résolution et ledit au moins un flux vidéo haute résolution proviennent de caméras différentes ; et
**caractérisé en ce que,** appliqué en association avec un deuxième stockage de données comprenant des deuxièmes zones d'image haute résolution pré-stockées indexées par des deuxièmes équivalents basse résolution, le processus comprend en outre le remplacement (352) de parties de trames dudit flux vidéo basse résolution qui sont identiques à un ou plusieurs desdits deuxièmes équivalents basse résolution par des deuxièmes zones haute résolution obtenues à partir dudit deuxième stockage de données conformément à son indexation.

2. Processus selon l'une quelconque des revendications précédentes, dans lequel ledit stockage (333) desdites premières zones d'image haute résolution consiste à accorder un temps d'expiration auxdites zones d'image haute résolution, le processus comprenant en outre la désactivation (360) desdites premières zones d'image haute résolution conformément audit temps d'expiration.

3. Processus selon l'une quelconque des revendications précédentes, dans lequel ladite amélioration (350) dudit flux vidéo basse résolution comprend la détermination d'une similarité avec ledit ou lesdits équivalents parmi lesdits premiers équivalents basse résolution en appliquant un critère de « voisinage le plus proche », et dans lequel ledit remplacement par des premières zones haute résolution comprend le remplacement par une somme pondérée des premières zones haute résolution respectives correspondant aux équivalents basse résolution qui répondent audit critère de « voisinage le plus proche ».

4. Processus selon l'une quelconque des revendications précédentes, dans lequel ladite similarité est déterminée sur la base de gradients d'intensité.

5. Programme informatique comprenant des moyens logiciels configurés pour mettre en oeuvre, lorsqu'il est exécuté, le procédé selon l'une quelconque des revendications précédentes.

6. Système (400) pour générer un flux vidéo haute résolution, le système (400) comprenant :
- une première interface vidéo (410) pour recevoir un flux vidéo basse résolution ;
- une deuxième interface vidéo (420) pour recevoir au moins un flux vidéo haute résolution ;
- un processeur d'enregistrement (430), connecté de manière opérationnelle à ladite deuxième interface vidéo (420) et à un premier stockage de données (440), ledit processeur d'enregistrement (430) étant configuré pour sélectionner des premières zones d'image haute résolution à partir dudit au moins un flux vidéo haute résolution, pour générer des premiers équivalents basse résolution respectifs desdites premières zones d'image haute résolution et pour stocker lesdites premières zones d'image haute résolution indexées par lesdits premiers équivalents basse résolution dans ledit stockage de données (440) ; et
- un processeur d'amélioration d'image (450), connecté de manière opérationnelle à ladite première interface vidéo (410) et audit premier stockage de données (440), ledit processeur d'amélioration d'image (450) étant configuré pour remplacer des parties de trames dudit flux vidéo basse résolution qui sont identiques à un ou plusieurs équivalents parmi lesdits premiers équivalents basse résolution par des premières zones haute résolution obtenues à partir dudit premier stockage de données (440) conformément à ladite indexation ;
dans lequel ledit flux vidéo basse résolution et ledit au moins un flux vidéo haute résolution sont sensiblement synchronisés et représentent un même décor général,
dans lequel ledit flux vidéo basse résolution et ledit au moins un flux vidéo haute résolution proviennent de caméras différentes ; et
**caractérisé en ce qu'il** comprend en outre un deuxième stockage de données (450), ledit deuxième stockage de données (450) comprenant des deuxièmes zones d'image haute résolution pré-stockées indexées par des deuxièmes équivalents basse résolution,
dans lequel ledit processeur d'amélioration d'image (450) est en outre configuré pour remplacer des parties de trames dudit flux vidéo basse résolution qui sont identiques à un ou plusieurs parmi lesdits deuxièmes équivalents basse résolution par des deuxièmes zones haute résolution obtenues à partir dudit deuxième stockage de données (440) conformément à son indexation.

7. Système (400) selon la revendication 6, comprenant en outre un minuteur (460), connecté de manière opérationnelle audit processeur d'enregistrement (430), dans lequel ledit processeur d'enregistrement (430) est en outre configuré pour accorder un temps d'expiration auxdites premières zones d'image haute résolution, et pour désactiver lesdites premières zones d'image haute résolution conformément audit temps d'expiration en association avec ledit minuteur.

8. Système (400) selon l'une quelconque des revendications 6 et 7, dans lequel ledit processeur d'amélioration d'image (450) est en outre configuré pour déterminer une similarité avec ledit ou lesdits équivalents parmi lesdits premiers équivalents basse résolution en appliquant un critère de « voisinage le plus proche », et pour remplacer lesdites parties par une somme pondérée des premières zones haute résolution respectives correspondant aux équivalents basse résolution qui répondent audit critère de « voisinage le plus proche ».

9. Système (400) selon l'une quelconque des revendications 6 à 8, dans lequel ledit processeur d'amélioration d'image (450) est en outre configuré pour déterminer ladite similarité sur la base de gradients d'intensité.
